# EUROPEAN PATENT APPLICATION

(11) **EP 4 527 495 A1**
(43) Date of publication of application: **26.03.2025**
(21) Application number: 24200943.9
(22) Date of filing: 18.09.2024
(51) Int. Cl.: B01J 6/00, B01J 19/02, C10J 3/74, F23M 5/00

(54) **REACTION CHAMBER FOR A FEEDSTOCK REACTOR**

(30) Priority: 19.09.2023 US 202363539255 P
(71) Applicant: Ekona Power Inc., Burnaby, British Columbia, V5A 2H5 (CA)
(72) Inventor: KENDRICK, Donald W., Burnaby, V5A 2H5 (CA); COLEMAN, Timothy Scott, Burnaby, V5A 2H5 (CA)
(74) Representative: Hamer, Thomas Daniel

(57) **Abstract**

A reaction chamber for a feedstock reactor includes an outer shell defining a reaction volume and having a heat-resistant refractory, an inlet for allowing a feedstock to enter the reaction volume, an outlet for allowing reaction products, formed as a result of decomposition of the feedstock in the reaction volume, to exit the reaction volume, and a protective liner lining an interior surface of the outer shell and comprising a compliant shock-absorbing layer.

## Description

### Field

The present disclosure relates to pyrolysis and in particular to a reaction chamber for a feedstock reactor.

### Background

Thermal pyrolysis is a method by which a feedstock gas, such as a hydrocarbon, is decomposed without oxygen into its constituent elements (in the case of a hydrocarbon, carbon and hydrogen). The decomposition is triggered by sufficiently raising the temperature of the feedstock gas to a point at which the chemical bonds of the elements of the feedstock gas break down.

Such pyrolysis may be achieved, for example, by bringing the feedstock gas into thermal contact with a hot fluid. For instance, combustion products, formed as a result of combusting a combustible fuel, may be mixed with the feedstock gas. At high-enough temperatures, the mixing of the hot fluid with the feedstock gas, and the transfer of thermal energy from the hot fluid to the feedstock gas, is sufficient to cause the feedstock gas to break down and decompose.

During operation of a feedstock reactor, especially over a relatively high number of reaction cycles, the reaction chamber is exposed to high temperatures and pressures. These pose a concern for the delicate refractory ceramics which generally line or are otherwise comprised in the material of the reaction chamber.

### Summary

According to a first aspect, there is provided a reaction chamber for a feedstock reactor, comprising: an outer shell defining a reaction volume and comprising a heat-resistant refractory; an inlet for allowing a feedstock to enter the reaction volume; an outlet for allowing reaction products, formed as a result of decomposition of the feedstock in the reaction volume, to exit the reaction volume; and a protective liner lining an interior surface of the outer shell and comprising a compliant shock-absorbing layer.

The protective liner may further comprise a first heat-resistant layer.

The first heat-resistant layer may be positioned between the interior surface of the outer shell and the compliant shock-absorbing layer.

The protective liner may further comprise a second heat-resistant layer.

The first heat-resistant layer may be positioned between the interior surface of the outer shell and the compliant shock-absorbing layer. The compliant shock-absorbing layer may be positioned between the first heat-resistant layer and the second heat-resistant layer.

The heat-resistant refractory may be a ceramic.

The first heat-resistant layer may comprise a metal.

The first heat-resistant layer may comprise one or more selected from the group consisting of: FeCr; TiZrMo; and a refractory metal.

The second heat-resistant layer may comprise a metal.

The second heat-resistant layer may comprise one or more selected from the group consisting of: FeCr; TiZrMo; and a refractory metal.

The compliant shock-absorbing layer may comprise one or both of a ceramic fiber paper and a FeCrAl mesh.

According to a further aspect of the disclosure, there is provided a method of protecting a reaction chamber for a feedstock reactor, comprising: inserting a protective liner into the reaction chamber, wherein the protective liner comprises a compliant shock-absorbing layer; and lining an interior surface of the reaction chamber with the protective liner.

The protective liner may further comprise a first heat-resistant layer.

The first heat-resistant layer and the compliant shock-absorbing layer may be cylindrical. The method may further comprise, before inserting the protective liner into the reaction chamber, forming the protective liner by positioning the cylindrical compliant shock-absorbing layer around the first cylindrical heat-resistant layer.

Forming the protective liner may further comprise positioning a second cylindrical heat-resistant layer around the cylindrical compliant shock-absorbing layer.

Forming the protective liner may comprise: first positioning the cylindrical compliant shock-absorbing layer around the second cylindrical heat-resistant layer; and then positioning the first cylindrical heat-resistant layer around the cylindrical compliant shock-absorbing layer.

The protective liner may be resiliently biased such that, after being inserted into the reaction chamber, the protective liner is biased to line the interior surface of the reaction chamber.

The protective liner may comprise a longitudinal opening extending from a first end of the protective liner to an opposite second end of the protective liner.

The longitudinal opening may define first and second opposed edges of the protective liner. Inserting the protective liner into the reaction chamber may comprise spring-loading the protective liner by overlapping the first and second edges of the protective liner before inserting the protective liner into the reaction chamber.

The protective liner may further comprise one or more apertures in the protective liner. Lining the interior surface of the reaction chamber with the protective liner may comprise aligning the one or more apertures with one or more nozzles extending into the reaction chamber.

This summary does not necessarily describe the entire scope of all aspects. Other aspects, features, and advantages will be apparent to those of ordinary skill in the art upon review of the following description of specific implementations.

### Drawings

Implementations of the disclosure will now be described in detail in conjunction with the accompanying drawings of which:
FIG. 1 is a schematic diagram of a feedstock reactor being operated, according to an implementation of the disclosure;
FIG. 2A shows a cross-section of a reaction chamber according to an implementation of the disclosure;
FIG. 2B shows a tapered end of a heat-resistant layer of a protective liner according to an implementation of the disclosure;
FIG. 2C shows a cylindrical heat-resistant layer of a protective liner according to an implementation of the disclosure;
FIGS. 3A-3C show protective liners according to implementations of the disclosure; and
FIG. 4 shows a compliant shock-absorbing material according to an implementation of the disclosure.

### Detailed Description

The present disclosure seeks to provide an improved reaction chamber for a feedstock reactor. While various implementations of the disclosure are described below, the disclosure is not limited to these implementations, and variations of these implementations may well fall within the scope of the disclosure which is to be limited only by the appended claims.

Generally, implementations of the disclosure relate to methods and systems for performing pyrolysis of a feedstock gas, such as natural gas or a hydrocarbon gas, such as methane. Examples of such methods of pyrolysis, as well as example feedstock gas reactors that may be used for such pyrolysis, are described in further detail in Patent Cooperation Treaty (PCT) Publication No. WO 2020/118417, herein incorporated by reference in its entirety.

Generally, according to implementations of the disclosure, there is disclosed herein a reaction chamber for a feedstock reactor. The reaction chamber includes an outer shell defining a reaction volume and comprising a heat-resistant refractory, an inlet for allowing a feedstock to enter the reaction volume, an outlet for allowing reaction products, formed as a result of decomposition of the feedstock in the reaction volume, to exit the reaction volume, and a protective liner lining an interior surface of the outer shell. The protective liner includes a compliant shock-absorbing layer, and may additionally include one or more heat-resistant layers. For example, the protective liner may include a first heat-resistant layer between the interior surface of the outer shell and the compliant shock-absorbing layer. The protective liner may include a second heat-resistant layer. The first heat-resistant layer may be positioned between the interior surface of the outer shell and the compliant shock-absorbing layer, and the compliant shock-absorbing layer may be positioned between the first heat-resistant layer and the second heat-resistant layer.

Implementations of the disclosure will now be described in detail with reference to the drawings.

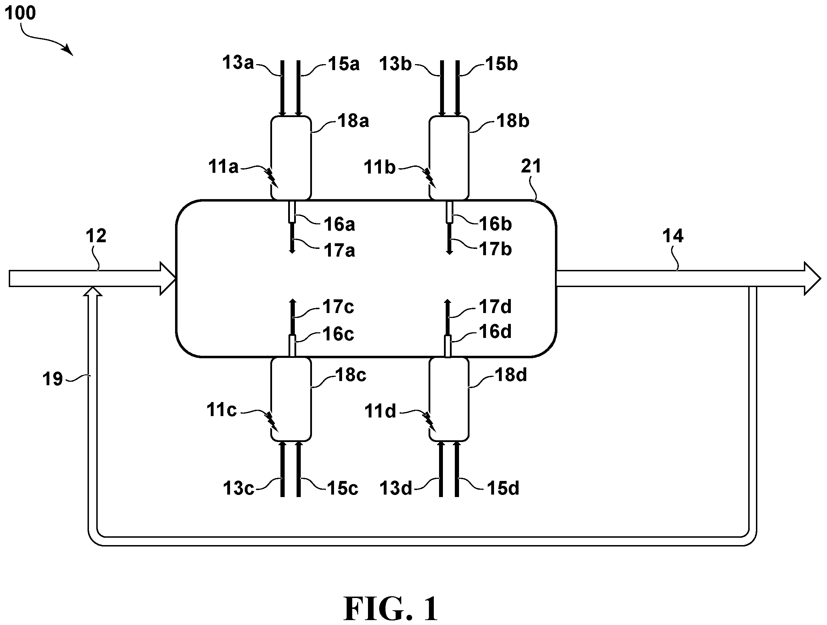

Turning to FIG. 1, there is shown schematically an implementation of a feedstock reactor 100 used to decompose feedstock, according to an implementation of the disclosure.

Reactor 100 includes a reaction chamber 21 connected to multiple combustors 18a-18d (which collectively may be referred to as combustors 18). Each combustor 18 includes a combustion chamber into which is fed an oxidant 13a-13d (for example, pure oxygen or air) and a fuel 15a-15d (for example, unreacted feedstock). Each combustor 18 further includes an igniter 11a-11a for triggering combustion of the fuel and the oxidant within the combustion chamber.

During a reaction cycle of reactor 100, a feedstock 12 (such as a hydrocarbon, for example methane) is fed under pressure into reaction chamber 21. Similarly, combustors 18a-18d are filled with a combustible gas mixture comprising a mixture of fuel 15a-d and oxidant 13a-d. Once reaction chamber 21 and combustors 18 have been loaded with feedstock and combustible gas mixture, respectively, igniters 11a-d are triggered and cause combustion of the combustible gas mixture in combustors 18 which results in the generation of hot combustion products 17a-d. Combustion products 17a-d flow under pressure through nozzles 16a-d that are connected to combustors 18 and that extend into the interior volume of reaction chamber 21. Combustion products 17a-d are ejected out of nozzles 16a-d and mix with the feedstock within reaction chamber 21.

As a result of the flow of combustion products 17a-d into reaction chamber 21, thermal energy is transferred from combustion products 17a-d to the feedstock. Energy is also transferred from combustion products 17a-d to the feedstock via dynamic compression of the feedstock as a result of the pressure increasing within reaction chamber 21 in response to the flow of hot, pressurized combustion products into reaction chamber 21. Past a certain point, the increase in the temperature of the feedstock is sufficient to drive decomposition or pyrolysis of the feedstock. In the case of methane, for example, the decomposition takes the following form:

CH₄ + energy → C + 2H₂

The pyrolysis reaction generates reaction products 14 that are extracted from reaction chamber 21. A portion of reaction products 14 is recycled back to reaction chamber 21 for future reaction cycles. In the case of methane pyrolysis, reaction products 14 may comprise one or more of hydrogen, nitrogen, and carbon, the unwanted products may comprise primarily carbon dioxide, nitrogen, and water, and the recycled gas mixture may comprise primarily unreacted natural gas, hydrogen, nitrogen, and carbon monoxide.

As described above, reaction chamber 21 includes an outer shell defining a reaction volume and comprising a heat-resistant refractory (for example, a ceramic), and a protective liner lining the outer shell and including a compliant shock-absorbing layer, and optionally one or more heat-resistant layers.

According to some implementations, the protective liner includes a first heat-resistant layer and a second heat-resistant layer which may be metallic layers each comprising a heat-resistant metal alloy such as FeCr, TiZrMo, or a refractory metal such as tungsten, molybdenum, tantalum, niobium, rhenium, or hafnium, or a combination of any of these. While the first heat-resistant layer may provide further heat-resistance to the outer shell (in addition to the heat-resistance provided by the heat-resistant refractory), during cyclic operation of feedstock reactor 100 (i.e., as a result of repeated reaction cycles), reaction chamber 21 undergoes cyclic shock-loading which may damage the outer shell and potentially compromise the integrity of reaction chamber 21. In order to provide a degree of protection against such shock loading, the protective liner includes a compliant shock-absorbing layer which may assist in protecting the outer shell from such shock loading during operation of reactor 100. In particular, the compliant shock-absorbing layer may help prevent shock impulses from cracking the delicate heat-resistant refractory comprised within the outer shell.

The compliant shock-absorbing layer may additionally have thermal-resistant properties to allow it to withstand the high temperatures generated during pyrolysis. Further thermal protection may be provided by the second heat-resistant layer which, together with the first heat-resistant layer, may sandwich the compliant shock-absorbing layer. The compliant shock-absorbing layer may furthermore be oxidation-resistant (for example, the compliant shock-absorbing layer may itself be formed of one or more layers providing the compliant shock-absorbing layer with oxidation resistance).

According to some implementations, the protective liner may comprise the compliant shock-absorbing layer and no heat-resistant layers. However, the inclusion of a heat-resistant layer between the compliant shock-absorbing layer and the outer shell of the reaction chamber may assist in preventing the compliant shock-absorbing layer from adhering to the refractory of the outer shell during operation of the reactor.

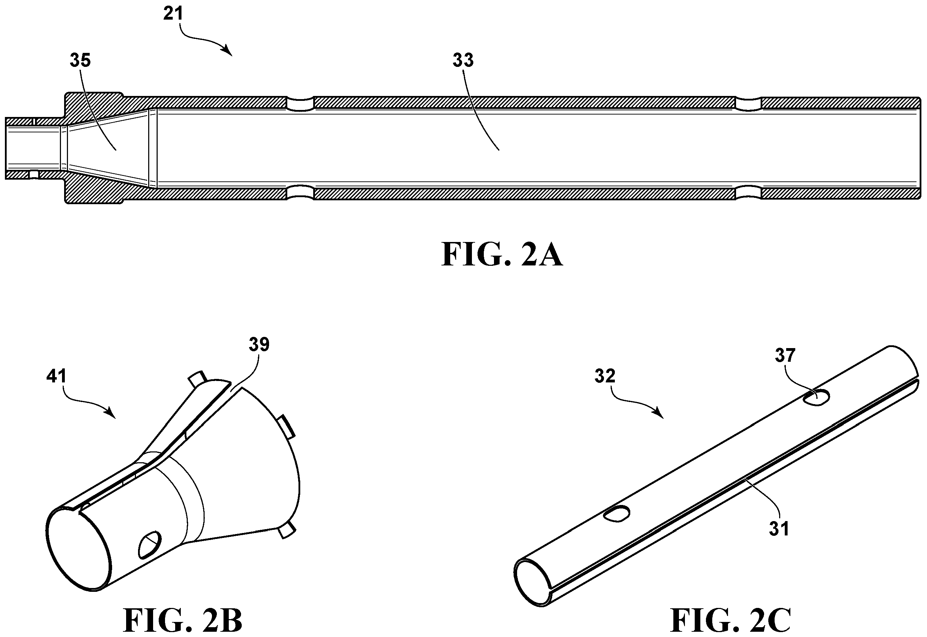

FIG. 2A is a schematic cross-sectional view of a reaction chamber 21 according to an implementation of the disclosure. Reaction chamber 21 includes a cylindrical outer shell 33 comprising one or more heat-resistant refractory materials (such as ceramics) to provide heat-resistance to reaction chamber 21 against the high temperatures generated during pyrolysis. At an end of reaction chamber 21 is provided a tapered end portion 35 (which also includes the heat-resistant refractory) adjacent cylindrical outer shell 33. A similar tapered end portion (not shown) is provided at the opposite end of reaction chamber 21, also adjacent cylindrical outer shell 33.

FIG. 2B illustrates an example of a tapered metallic heat-resistant layer 41 that may be used to line tapered end portion 35. A longitudinal slit 39 extends along the length of metallic heat-resistant layer 41 and is used (as described in further detail below) to spring-load metallic heat-resistant layer 41 when inserting a protective liner that includes metallic heat-resistant layer 41 into tapered end portion 35.

FIG. 2C shows an example of a cylindrical, first metallic heat-resistant layer 32 that may be used to line cylindrical outer shell 33. A longitudinal slit 31 extends along the length of metallic heat-resistant layer 32 and is used (as described in further detail below) to spring-load metallic heat-resistant layer 32 when inserting a protective liner that includes metallic heat-resistant layer 32 into cylindrical outer shell 33. Holes 37 are provided in metallic heat-resistant layer 32 for receiving injection nozzles 16 (illustrated schematically in FIG. 1).

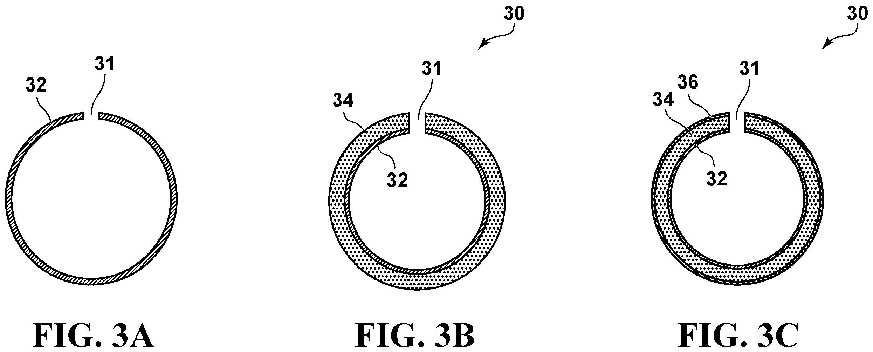

Turning to FIGS. 3A-3B, there are shown various implementations of a protective liner 30 used to line outer shell 33 of reaction chamber 21.

FIG. 3A shows a cross-section of metallic heat-resistant layer 32. As shown in FIG. 2C, metallic heat-resistant layer 32 comprises longitudinal slit 31 extending along its length.

FIG. 3B shows a cross-section of protective liner 30 including metallic heat-resistant layer 32 and a compliant shock-absorbing layer 34 lining the interior of metallic heat-resistant layer 32. Compliant shock-absorbing layer 34 also comprises a longitudinal slit 31 extending along its length and that is aligned with the longitudinal slit of metallic heat-resistant layer 32.

FIG. 3C shows a cross-section of protective liner 30 including metallic heat-resistant layer 32, compliant shock-absorbing layer 34, and another cylindrical metallic heat-resistant layer 36 lining the interior of compliant shock-absorbing layer 34. Metallic heat-resistant layer 36 also comprises a longitudinal slit 31 extending along its length and that is aligned with the longitudinal slits of compliant shock-absorbing layer 34 and metallic heat-resistant layer 32.

The protective liner seen in FIG. 3C can be formed by first positioning compliant shock-absorbing layer 34 around cylindrical metallic heat-resistant layer 32, and then positioning cylindrical metallic heat-resistant layer 36 around compliant shock-absorbing layer 34.

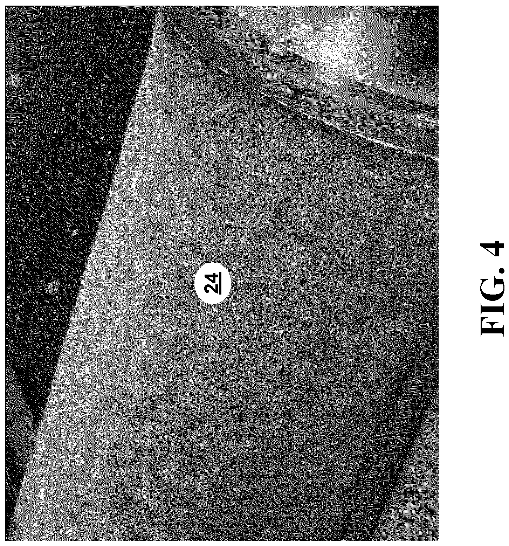

FIG. 4 shows an example of a compliant shock-absorbing layer 24. Compliant shock-absorbing layer 24 comprises one or more suitable materials, such as a ceramic fiber paper or a FeCrAl mesh (as in the case of FIG. 4). A FeCrAl mesh is generally highly oxidation-resistant and can be used continuously up to 1,400 degrees C. Examples of ceramic fiber paper that may be used include Fiberfrax^{®} (https://www.unifrax.com/product/fiberfrax-felt-products) and Kaowool^{®} (https://www.hb-specialalloy.com/fecral-alloys-introduction/).

In order to line outer shell 33 of reaction chamber 21 with protective liner 30, protective liner 30 may be compressed / spring-loaded by causing one edge of protective liner 30, adjacent longitudinal slit 31, to overlap the other opposed edge (thereby compressing the tube). Protective liner 30 is then inserted into reaction chamber 21 and then released to allow protective liner 30 to be biased against the internal diameter of outer shell 33. This spring-loaded installation may be further reinforced by providing holes 37 (examples of which are shown in FIG. 2C) in protective liner 30 that align with injection nozzles 16, thereby trapping protective liner 30 relative to outer shell 33. Protective liner 30 may be free to thermally grow as needed and may be made in sections to ensure tapered end portions 35 may be similarly lined and protected.

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, as used herein, the terms coupled, coupling, or connected can indicate that two elements or devices are directly connected to one another or connected to one another through one or more intermediate elements or devices via a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

Use of language such as "at least one of X, Y, and Z," "at least one of X, Y, or Z," "at least one or more of X, Y, and Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

While the disclosure has been described in connection with specific implementations, it is to be understood that the disclosure is not limited to these implementations, and that alterations, modifications, and variations of these implementations may be carried out by the skilled person without departing from the scope of the disclosure.

It is furthermore contemplated that any part of any aspect or implementation discussed in this specification can be implemented or combined with any part of any other aspect or implementation discussed in this specification.

## Claims

1. A reaction chamber for a feedstock reactor, comprising:
an outer shell defining a reaction volume and comprising a heat-resistant refractory;
an inlet for allowing a feedstock to enter the reaction volume;
an outlet for allowing reaction products, formed as a result of decomposition of the feedstock in the reaction volume, to exit the reaction volume; and
a protective liner lining an interior surface of the outer shell and comprising a compliant shock-absorbing layer.

2. The reaction chamber of claim 1, wherein the protective liner further comprises a first heat-resistant layer.

3. The reaction chamber of claim 2, wherein the first heat-resistant layer is positioned between the interior surface of the outer shell and the compliant shock-absorbing layer.

4. The reaction chamber of claim 1 or 2, wherein the protective liner further comprises a second heat-resistant layer.

5. The reaction chamber of claim 4, wherein:
the first heat-resistant layer is positioned between the interior surface of the outer shell and the compliant shock-absorbing layer; and
the compliant shock-absorbing layer is positioned between the first heat-resistant layer and the second heat-resistant layer.

6. The reaction chamber of any one of claims 1-5, wherein the heat-resistant refractory is a ceramic.

7. The reaction chamber of claim 2, wherein the first heat-resistant layer comprises a metal.

8. The reaction chamber of claim 7, wherein the first heat-resistant layer comprises one or more selected from the group consisting of: FeCr; TiZrMo; and a refractory metal.

9. The reaction chamber of claim 4, wherein the second heat-resistant layer comprises a metal, and optionally wherein the second heat-resistant layer comprises one or more selected from the group consisting of: FeCr; TiZrMo; and a refractory metal.

10. The reaction chamber of any one of claims 1-9, wherein the compliant shock-absorbing layer comprises one or both of a ceramic fiber paper and a FeCrAl mesh.

11. A method of protecting a reaction chamber for a feedstock reactor, comprising:
inserting a protective liner into the reaction chamber, wherein the protective liner comprises a compliant shock-absorbing layer; and
lining an interior surface of the reaction chamber with the protective liner.

12. The method of claim 11, wherein the protective liner further comprises a first heat-resistant layer, and optionally wherein:
the first heat-resistant layer and the compliant shock-absorbing layer are cylindrical; and
the method further comprises, before inserting the protective liner into the reaction chamber, forming the protective liner by positioning the cylindrical compliant shock-absorbing layer around the first cylindrical heat-resistant layer,
and optionally wherein forming the protective liner further comprises:
positioning a second cylindrical heat-resistant layer around the cylindrical compliant shock-absorbing layer,
and optionally wherein forming the protective liner comprises:
first positioning the cylindrical compliant shock-absorbing layer around the second cylindrical heat-resistant layer; and
then positioning the first cylindrical heat-resistant layer around the cylindrical compliant shock-absorbing layer.

13. The method of claim 11 or 12, wherein the protective liner is resiliently biased such that, after being inserted into the reaction chamber, the protective liner is biased to line the interior surface of the reaction chamber.

14. The method of any one of claims 11-13, wherein the protective liner comprises a longitudinal opening extending from a first end of the protective liner to an opposite second end of the protective liner, and optionally wherein:
the longitudinal opening defines first and second opposed edges of the protective liner; and
inserting the protective liner into the reaction chamber comprises spring-loading the protective liner by overlapping the first and second edges of the protective liner before inserting the protective liner into the reaction chamber.

15. The method of any one of claims 11-14, wherein:
the protective liner further comprises one or more apertures in the protective liner; and
lining the interior surface of the reaction chamber with the protective liner comprises aligning the one or more apertures with one or more nozzles extending into the reaction chamber.
